# EUROPEAN PATENT SPECIFICATION

(11) **EP 2 468 533 B1**
(45) Date of publication and mention of the grant of the patent: **04.12.2013**
(21) Application number: 11194150.6
(22) Date of filing: 16.12.2011
(51) Int. Cl.: B60C 5/14, B60C 1/00, B60C 17/00

(54) **Pneumatic tire with composite innerliner**
Luftreifen mit Innenauskleidung aus Verbundstoff
Pneu avec garniture composite

(30) Priority: 22.12.2010 US 201061425829 P; 13.07.2011 US 201113181773
(43) Date of publication of application: 27.06.2012
(73) Proprietor: The Goodyear Tire & Rubber Company, Akron, OH 44316-0001 (US)
(72) Inventor: Kaes, Christian, L-9184 Schrondweiler (LU); Burg, Gary Robert, Massillon, OH Ohio 44646 (US); Stuber, Neil Philip, Munroe Falls, OH Ohio 44262 (US); Koch, Brian Richard, Hartville, OH Ohio 44632 (US); Dyrlund, Christopher David, Canton, OH Ohio 44705 (US); Colantonio, Luigi Domenico, B-6600 Bastogne (BE)
(74) Representative: Kutsch, Bernd

(56) References cited:
- US-A1- 2008 093 001

## Description

### Field of the Invention

The invention relates in general to tire manufacturing, and more particularly to a tire component such as an innerliner.

### Background of the Invention

Tire manufacturers have progressed to more complicated designs due to an advance in technology as well as a highly competitive industrial environment. In particular, tire designers seek to use multiple rubber compounds in a tire in order to meet customer demands. Using multiple rubber compounds per tire can result in a huge number of compounds needed to be on hand for the various tire lines of the manufacturer. For cost and efficiency reasons, tire manufacturers seek to limit the number of compounds available due to the extensive costs associated with each compound. Each compound typically requires the use of a Banbury mixer, which involves expensive capital expenditures. Furthermore, Banbury mixers have difficulty mixing up tough or stiff rubber compounds. The compounds generated from the Banbury mixers are typically shipped to the tire building plants, thus requiring additional costs for transportation. The shelf life of the compounds is not infinite, and if not used within a certain time period, is scrapped.

Thus an improved method and apparatus is desired which substantially reduces the need for the use of Banbury mixers while providing an apparatus and methodology to provide custom mixing at the tire building machine by blending of two or more compounds together, and controlling the ratio of the compounds and other additives. Both non-productive compounds and productive compounds could be blended together. It is further desired to have a system at the tire building machine which provides for the ability to manufacture customizable compounds with accelerators. Yet an additional problem to be solved is to generate the compounds continuously at the tire building machine.

One component of interest is the tire innerliner. The innerliner functions to prevent air loss from the tire inner chamber. Rubbers such as butyl or halobutyl rubber are often used as a major portion of the innerliners. One disadvantage to using halobutyl rubber is that it is very expensive. In particular, run on flat tires tend to have low air permeability of the inner liner. This is due to the fact that the tire needs to be flexible in the flexzone or the zone where the insert is located. The material flexibility requirements results in a compromise of the air permeability of the inner liner. Thus a higher concentration of halobutyl rubber cannot be used in the flex zone because the material is generating too much heat which is detrimental for rolling resistance and runflat performance. Thus an improved innerliner design is desired which overcomes the aforementioned disadvantages.

### Summary of the Invention

The invention relates to a tire in accordance with claim 1.

Dependent claims refer to preferred embodiments of the invention.

### Definitions

"Axial" and "axially" means the lines or directions that are parallel to the axis of rotation of the tire.

"Bead" or "Bead Core" means generally that part of the tire comprising an annular tensile member, the radially inner beads are associated with holding the tire to the rim being wrapped by ply cords and shaped, with or without other reinforcement elements such as flippers, chippers, apexes or fillers, toe guards and chafers.

"Carcass" means a laminate of tire ply material and other tire components cut to length suitable for splicing, or already spliced, into a cylindrical or toroidal shape. Additional components may be added to the carcass prior to its being vulcanized to create the molded tire.

"Inner Liner" means the layer or layers of elastomer or other material that form the inside surface of a tubeless tire and that contain the inflating fluid within the tire.

"Inserts" means the reinforcement typically used to reinforce the sidewalls of runflat-type tires; it also refers to the elastomeric insert that underlies the tread.

"Radial" and "radially" mean directions radially toward or away from the axis of rotation of the tire.

"Sidewall" means a portion of a tire between the tread and the bead.

### Brief Description of the Drawings

The invention will be described by way of example and with reference to the accompanying drawings in which:
FIG. 1 is a cross-sectional view of a tire in accordance with the invention;
FIG. 2 is a schematic of a mixing system useful for making the present invention.
FIG. 3 is a schematic of a second embodiment of a mixing system suitable for making the present invention;
FIG. 4 is a schematic of a tire having an innerliner with a gradient in composition; and
FIG. 5 is a schematic of the mixing system shown together with a mold.

### Detailed Description of the Invention

### I. Tire Construction

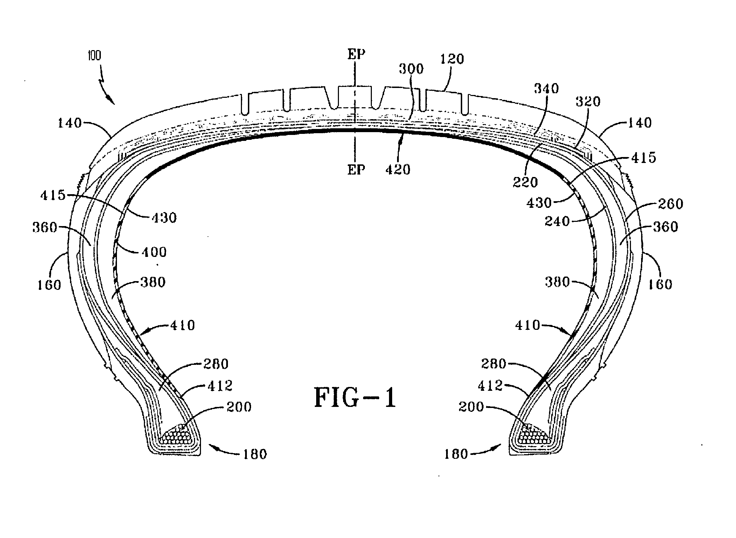

FIG. 1 illustrates a pneumatic radial runflat tire 100 of the present invention. The tire is a passenger tire, but the disclosed construction is not limited to a runflat tire or a passenger tire, and may be used for tires for other applications. The tire has a ground-engaging tread 120 that terminates in the shoulders 140 at the lateral edges of the tread 120. Sidewalls 160 extend from the shoulders 140 and terminate in a pair of bead portions 180, each bead portion 180 has an annular inextensible bead core 200. The bead cores 200 are preferably constructed of a single or monofilament steel wire continuously wrapped and a suitable bead core construction is described in US-B- 5,263,526. The tire 100 has a carcass reinforcing structure 220 that extends from the first bead portion 180 through the first sidewall 160, tread 120, second sidewall portion 160 to the second bead portion 180.

The carcass reinforcing structure 220 comprises at least one reinforcing ply. In the illustrated embodiment, there is a first radially inner reinforcing ply structure 240, the ends of which are turned up around the bead cores 200, and may further include an optional radially outer second reinforcing ply structure 260, the ends of which are not turned about the bead cores 200 and is what is called a "floating" ply. Each ply 240, 260 is formed from a single layer of parallel reinforcing cords. The cords may be made of any material normally used for cord reinforcement of rubber articles, for example, and not by way of limitation, rayon, nylon, polyester, and steel. Preferably, the cords are made of material having a high adhesion property with rubber and high heat resistance. While this embodiment has only two plies, any number of carcass plies may be used.

Located within the bead portions 180 and the radially inner portions of the sidewalls 160 are elastomeric apexes 280 disposed between carcass plies 240, 260 and the turnup ends of the first carcass ply 240. The elastomeric apexes 280 extend from the radially outer side of the bead cores 200 and up into the sidewalls 160, gradually decreasing in cross-sectional width. The apexes 280 terminate prior to the maximum section width of the tire 100.

Placed circumferentially about the radially outer surface of the carcass reinforcing structure 220 and beneath the tread 120 is a belt structure 300. In the illustrated tire 100, the belt structure 300 comprises two cut belt plies 320, 340. The cords of the belt plies 320, 340 may be oriented at any desired angle with respect to the mid-circumferential centerplane of the tire. The cords of the first belt ply 320 are disposed in an opposite direction to the mid-circumferential centerplane and from that of the cords of the adjacent belt ply 340. However, the belt structure 300 may comprise any number of belt plies of any desired configuration and the cords may be disposed at any desired angle. The belt structure 300 has a lateral stiffness across the belt width so as to minimize lifting of the tread 120 from the road surface during operation of the tire 100 in the uninflated state. In the embodiment illustrated, this is accomplished by making the cords of belt plies 320, 340 of steel and preferably of a steel cable construction.

Located adjacent to the carcass structure 220 in each sidewall 160 is at least one elastomeric insert. In the illustrated tire 100 of FIG. 1, there is shown a first insert 380 and an optional insert 360 in each sidewall 160. The outer insert 360 is located between the two carcass plies 240, 260 and the second and inner insert 380 is located axially inward of the first carcass ply 240. Each insert 360, 380 extends from at least the upper sidewall portions, with preferably at least one insert 380 extending from under the edge of the belt structure 300 so as to eliminate any hinge points, to the bead portion 180, with at least one insert 360 overlapping the bead apex 280 to eliminate any hinge points in the bead portion of the tire 100.

In accordance with the present invention, radially inward of the inner insert 380 is an inner liner 400. The inner liner 400 is composed of at least a first zone 420, and preferably a first zone 420 and second zone 410. The first zone 420 of material extends under the crown, preferably from one shoulder 430 to the other shoulder 430. The first zone 420 is preferably formed of an impermeable material such as butyl, bromobutyl, and halobutyl rubber as well as any material with the air permeability characteristics of butyl, bromobutyl, or halobutyl rubber. Because the inner liner is divided into zones, the first zone may comprise a higher concentration of butyl, halobutyl or bromobutyl rubber then typically used. The thickness of the impermeable liner is preferably in the range of 0.3 to 1.5 mm.

The second zone 410 has a first end 412 located in the bead portion 180 of the tire, and a second end 415 terminating in the shoulder area 430 of the tire. The second zone of the innerliner is optional, and if included, does not extend under the crown between the shoulders. The second zone is comprised of a nonhalobutyl, nonbromobutyl or non butyl rubber, and may comprise the same material as the insert. The inner liner is preferably continuous, wherein the first zone is joined to the second zone in the shoulder area of the tire.

In a second embodiment, the inner liner extends radially outward from the bead area, underneath the crown and radially inward to the other bead area. The inner liner comprises a continuous piece of rubber wherein the concentration of butyl, or halobutyl rubber is gradually increased. Preferably the portion of the inner liner under the crown has the highest concentration of butyl or halobutyl rubber, and the inner liner adjacent the sidewalls have decreased concentration or no butyl or halobutyl rubber.

### II. Apparatus

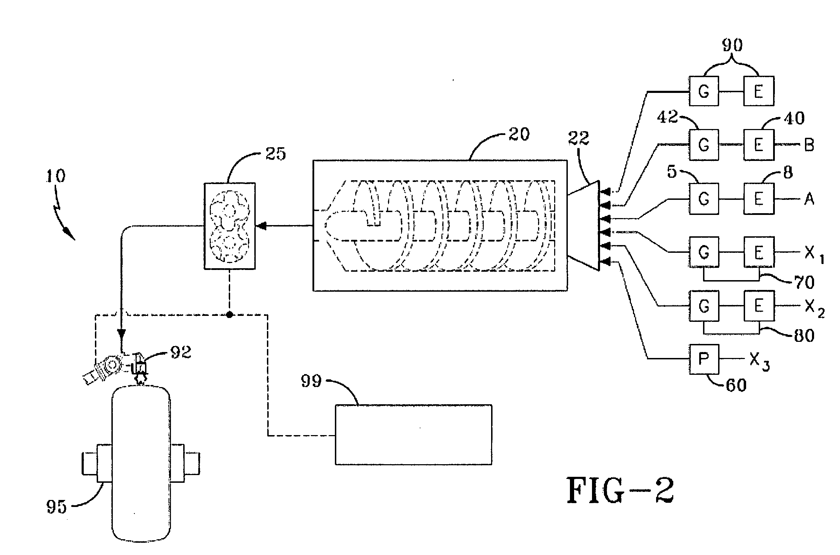

FIG. 2 illustrates a first embodiment of a method and apparatus 10 for a continuous mixing system suitable for use for making rubber compositions for tires or tire components. The continuous mixing system 10 is not limited to tire applications and may be used for example, to make other rubber components not related to tires such as conveyors, hoses, belts, etc. The continuous mixing system is particularly suited for making small tire components having a varying composition, such as inserts, apexes and treads (including those for retreaded tires). The mixing system may be provided directly at the tire or component building station for direct application of the rubber composition to a tire building drum or other component building apparatus. As shown in FIG. 2, the continuous mixing apparatus 10 includes a main extruder 20. The main extruder 20 has an inlet 22 for receiving one or more rubber compositions as described in more detail, below. The main extruder may comprise any commercial extruder suitable for processing of rubber or elastomer compounds. The extruder may comprise a commercially available extruder commonly known by those skilled in the art as a pin type extruder, a twin screw or a single screw extruder, or a ring type of extruder. One commercially available extruder suitable for use is a multicut transfermix (MCT) extruder, sold by VMI Holland BV, The Netherlands. Preferably, the extruder has a length to diameter ratio (L/D) of about 5, but may range from 3 to 5. A ring type, pin type or MCT type of extruder is preferred, but is not limited to same. The main extruder 20 functions to warm up the compound A to the temperature in the range of 80°C to 150°C, preferably 90°C to 120°C, and to masticate the rubber composition as needed.

The main extruder inlet 22 receives a first compound A, which may be a productive or non-productive rubber composition. Examples of compound A compositions are described in more detail, below. Compound A is first extruded by a first extruder 8 and optionally a second pump 5, preferably a gear pump. The extruder 8 may be a conventional pin type, ring type, dual screw or single screw type extruder. The pump 5 functions as a metering device and a pump and may have gears such as planetary gears, bevel gears or other gears. The extruder 8 and gear pump 5 may also be a combination unit. Preferably, the extruder 8 has an L/D of about 3, but may range from 3 to 6.

A second compound, referred to as "Compound B" also enters the main extruder 20 at the inlet 22 and is mixed together with compound A as the compounds travel through the main extruder. Compound B may also comprise a productive or non-productive rubber composition. Examples of compound B compositions are described in more detail, below. Compound B is first extruded by second extruder 40 and optionally a second pump 42, preferably a gear pump. The extruder 40 may be a conventional pin type, ring type, dual screw or single screw type extruder. The pump 42 functions as a metering device and a pump and may have gears such as planetary gears, bevel gears or other gears. The extruder 40 and gear pump 42 may also be a combination unit. Preferably, the extruder 40 has an L/D of about 3, but may range from 3 to 6.

The main extruder 20 blends compound A and compound B together in a precisely controlled amount. Oil may also be optionally injected into the main extruder 22 via an oil pump 60. The oil pump may be located at any desired location, but is preferably located at the inlet 22. The oil controls the viscosity of the compound mixture.

The apparatus 10 may further include a first additive pump 70 for pumping one or more additives such as a primary accelerator, which is added to the mixture at the main extruder inlet 22. The apparatus may further include a second additive pumping device 80 for pumping one or more additives such as a secondary accelerator into the main extruder inlet 22. The additive pumps 70, 80 may be gear pumps, gear pump extruders, Venturi pumps or other pumping means known to those skilled in the art.

If more than one accelerator is used, they may be added into the mixture separately or together. For example, a primary accelerator and a secondary accelerator may both be added. Accelerators are used to control the time and/or temperature required for vulcanization and to improve the properties of the rubber. The accelerator may be in powder form or an encapsulated powder into a resin or rubber base. Examples of accelerator compositions are described in more detail, below.

Other additives include a curative agent or precursor, which may also be added to the mixer via additive pump 90. One example of a curative agent is sulfur. The sulfur may be added in solid form. The additive pump 90 may be a gear pump, gear pump extruder combination, Venturi pump or other pumping means known to those skilled in the art.

Thus all of the constituents including compound A, compound B, sulfur, oil and any desired curative agents or precursors, or accelerators of the desired rubber composition are added to the inlet of the main extruder 20. The main extruder blends all the constituents together and produces an output mixture of compound C which is a precise mixture of the A and B compound, optional oil the optional accelerant and optional additives. The output mixture of compound C exits the main extruder and enters an optional gear pump 25. The optional gear pump 25 and main extruder 20 is preferably located in close proximity adjacent a tire component building station or tire building station 95 for direct application onto a core, mandrel, blank or tire building drum, as shown in FIG. 2. Gear pump 25 preferably has a special nozzle 95 or shaping die which applies the compound formulation output from the mixer exit directly onto the tire building machine 95 in strips which are wound onto a tire building drum or core.

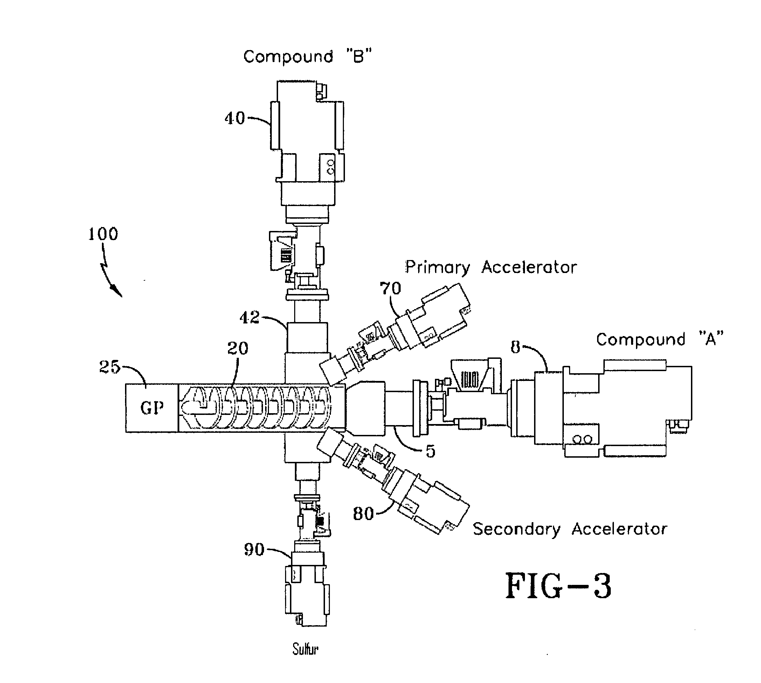

The ratio of the volumetric flow rate of compound A to the volumetric flow rate of compound B is precisely controlled by the ratio of the speed of the gear pump 5 for compound A and the speed of gear pump 42 for compound B. For example, the compound output from the system 10 may comprise a ratio of 20% of compound A and 80% of compound B by volume, as shown in FIG. 3. Alternatively, the compound output from the system may comprise a mixture D having a ratio of 35% of compound B and 65% of compound A by volume. Alternatively, the compound output from the system may comprise a mixture Z having a ratio of 10% of compound B and 90% of compound A by volume. The ratio of compound A to compound B can thus range from 0:100% to 100%:0. The ratio may be adjusted instantaneously by varying the speeds of gear pumps 25 and 42 by a computer controller 99. The computer controller 99 may additionally controls the extruder and gear pump operating parameters such as operating pressure, operating temperature, pump or screw speed.

Preferably, the computer controller 99 sets a pressure target value for the exit pressure of each extruder. The extruder speed is controlled by the controller, and is varied until the pressure target is met. The pressure target value affects the quality of mixing by causing backflow of the material in the extruder.

The system 10 of the present invention advantageously has a short residence time due to the following design features. First, all the components of compound C are added at the inlet of the main extruder. Because all the ingredients are added at the exact same location, precise formulations can be generated and controlled. Second, each extruder has a low length to diameter ratio. Third, the system is preferably located adjacent a component building station or tire building station to minimize the system line lengths in order to further reduce system residence time.

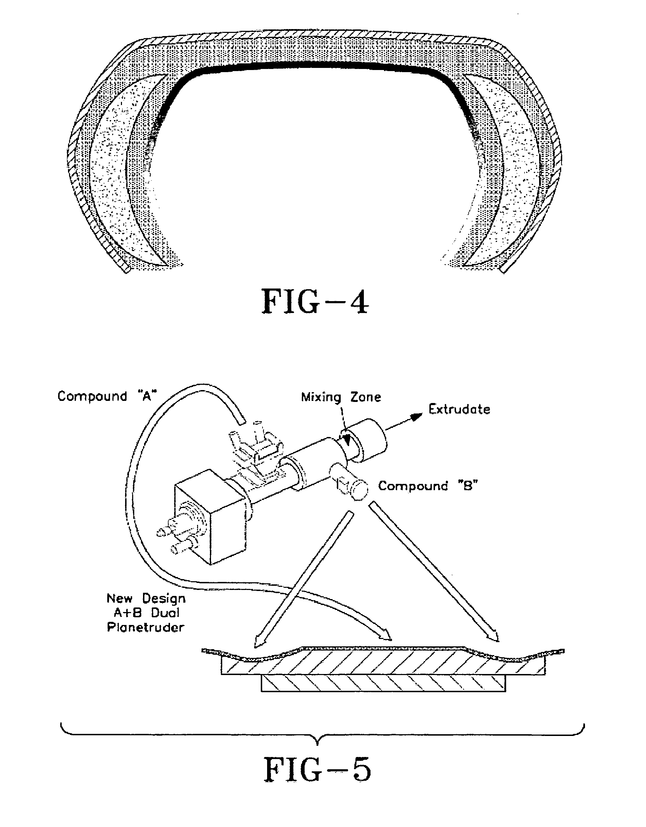

FIG. 4 illustrates a second embodiment of the extruder apparatus of the present invention. Everything is the same as described above, except for the following. Compound A is fed into the inlet 22 of the main extruder 20. Compound B passes through an extruder 40 in combination with a gear pump 42 as described above, and then is fed into the main extruder at a specific upstream location identified herein for reference purposes as "L". A primary accelerator is pumped through a pumping device 70 and enters the main extruder at the same location L. An optional secondary accelerator passes through a pumping device 80 and then enters the main extruder 20 at the same location L. Other additives include a curative agent or precursor, which may also be added to the mixer at location L via additive pump 90. Thus the addition of all the ingredients at the same extruder location allows for precise control of the compound constituents.

The following are compositions which may be used in conjunction with the invention.

### III. Accelerator Compositions

In one embodiment, a single accelerator system may be used, i.e., primary accelerator. The primary accelerator(s) may be used in total amounts ranging from 0.5 to 4, alternatively 0.8 to 1.5, phr. In another embodiment, combinations of a primary and a secondary accelerator might be used with the secondary accelerator being used in smaller amounts, such as from 0.05 to 3 phr, in order to activate and to improve the properties of the vulcanized rubber. Combinations of these accelerators might be expected to produce a synergistic effect on the final properties and are somewhat better than those produced by use of either accelerator alone. In addition, delayed action accelerators may be used which are not affected by normal processing temperatures but produce a satisfactory cure at ordinary vulcanization temperatures. Vulcanization retarders might also be used. Suitable types of accelerators that may be used in the present invention are amines, disulfides, guanidines, thioureas, thiazoles, thiurams, sulfenamides, dithiocarbamates and xanthates. In one embodiment, the primary accelerator is a sulfenamide. If a second accelerator is used, the secondary accelerator may be a guanidine, dithiocarbamate or thiuram compound. Suitable guanidines include dipheynylguanidine and the like. Suitable thiurams include tetramethylthiuram disulfide, tetraethylthiuram disulfide, and tetrabenzylthiuram disulfide.

### IV. Rubber Compositions

Representative rubbers that may be used in the rubber compound include acrylonitrile/diene copolymers, natural rubber, halogenated butyl rubber, butyl rubber, cis-1,4-polyisoprene, styrene-butadiene copolymers, cis-1,4-polybutadiene, styrene-isoprene-butadiene terpolymers ethylene-propylene terpolymers, also known as ethylene/propylene/diene monomer (EPDM), and in particular ethylene/propylene/dicyclopentadiene terpolymers. Mixtures of the above rubbers may be used. Each rubber layer may comprise the same rubber composition or alternating layers may be of different rubber composition.

The rubber compound may contain a platy filler. Representative examples of platy fillers include talc, clay, mica and mixture thereof. When used, the amount of platy filler ranges from 25 to 150 parts per 100 parts by weight of rubber (hereinafter referred to as phr). Preferably, the level of platy filler in the rubber compound ranges from 30 to 75 phr.

The various rubber compositions may be compounded with conventional rubber compounding ingredients. Conventional ingredients commonly used include carbon black, silica, coupling agents, tackifier resins, processing aids, antioxidants, antiozonants, stearic acid, activators, waxes, oils, sulfur vulcanizing agents and peptizing agents. As known to those skilled in the art, depending on the desired degree of abrasion resistance, and other properties, certain additives mentioned above are commonly used in conventional amounts. Typical additions of carbon black comprise from 10 to 150 parts by weight of rubber, preferably 50 to 100 phr. Typical amounts of silica range from 10 to 250 parts by weight, preferably 30 to 80 parts by weight and blends of silica and carbon black are also included. Typical amounts of tackifier resins comprise from 2 to 10 phr. Typical amounts of processing aids comprise 1 to 5 phr. Typical amounts of antioxidants comprise 1 to 10 phr. Typical amounts of antiozonants comprise 1 to 10 phr. Typical amounts of stearic acid comprise 0.50 to 3 phr. Typical amounts of accelerators comprise 1 to 5 phr. Typical amounts of waxes comprise 1 to 5 phr. Typical amounts of oils comprise 2 to 30 phr. Sulfur vulcanizing agents, such as elemental sulfur, amine disulfides, polymeric polysulfides, sulfur olefin adducts, and mixtures thereof, are used in an amount ranging from 0.2 to 8 phr. Typical amounts of peptizers comprise from 0.1 to 1 phr.

### V. Oil

The rubber composition may also include up to 70 phr of processing oil. Processing oil may be included in the rubber composition as extending oil typically used to extend elastomers. Processing oil may also be included in the rubber composition by addition of the oil directly during rubber compounding. The processing oil used may include both extending oil present in the elastomers, and process oil added during compounding. Suitable process oils include various oils as are known in the art, including aromatic, paraffinic, naphthenic, vegetable oils, and low PCA oils, such as MES, TDAE, SRAE and heavy naphthenic oils. Suitable low PCA oils include those having a polycyclic aromatic content of less than 3 percent by weight as determined by the IP346 method. Procedures for the IP346 method may be found in Standard Methods for Analysis & Testing of Petroleum and Related Products and British Standard 2000 Parts, 2003, 62nd edition, published by the Institute of Petroleum, United Kingdom.

## Claims

1. A pneumatic tire having a tread (120) terminating in a pair of shoulders (140), a carcass structure (220) comprising at least one carcass ply (240, 260), two bead regions (180), two sidewalls (160), each sidewall (160) having an upper sidewall portion that connects to the shoulders (140), a belt structure (300) between the tread (120) and the carcass structure (220), and an air impermeable inner liner (400) located radially inward of the carcass structure (220), **characterized in that**
(i) the inner liner (400) is formed of a butyl rubber and extends from the first shoulder to the second shoulder underneath the crown portion of the tire, and wherein the inner liner (400) does not extend from the shoulders (140) to the bead regions (180) of the tire (100); or
(ii) the inner liner (400) is formed of two zones (410, 420), wherein in the first zone (420) the inner liner (400) comprises or is made of a butyl rubber, the first zone extending from the first shoulder to the second shoulder underneath the crown portion of the tire, and wherein in the second zone (410) the inner liner (400) does not comprise butyl rubber or comprises butyl rubber but at a butyl concentration less than in the first zone (420), the second zone (410) extending from each of the shoulders (140) to the respective bead region (180) of the tire (100).

2. The tire of claim 1 having the features of option (i) of claim 1.

3. The tire of claim 1 having the features of option (ii) of claim 1.

4. The tire of claim 1, 2 or 3 wherein the tire is a radial ply runflat tire.

5. The tire of claim 1, 2, 3 or 4 wherein the carcass ply (240, 260) is a radial carcass ply.

6. The tire of claim one of the claims 1-5 wherein each upper sidewall portion is reinforced by an insert (380).

7. The tire of at least one of the previous claims wherein the inner liner has a thickness in a range of from 03. to 1.5 mm.

8. The tire of at least one of the previous claims wherein each upper sidewall portion is reinforced by a first insert (380) and a second insert (415).

9. The tire of at least one of the previous claims comprising a first and a second carcass ply (240, 260) wherein the first insert (360) is located between the two carcass plies (240, 260) and the first insert (380) is located axially inward of the axially inner of the first and second carcass plies (240, 260).

10. The tire of at least one of the previous claims wherein the inner liner (400) is formed of two zones (410, 420), wherein in the first zone (420) the inner liner (400) comprises or is made of a butyl rubber, the first zone extending from the first shoulder to the second shoulder underneath the crown portion of the tire, and wherein in the second zone (410) the inner liner (400) does not comprise butyl rubber and comprises or is made of the same material as the first or second insert (360, 380).

11. The tire of at least one of the previous claims 1 to 9 wherein the inner liner (400) is formed of two zones (410, 420), wherein in the first zone (420) the inner liner (400) comprises or is made of a butyl rubber, the first zone extending from the first shoulder to the second shoulder underneath the crown portion of the tire, wherein in the second zone (410) the inner liner (400) comprises butyl rubber at a butyl concentration less than in the first zone (420), the second zone (410) extending from each of the shoulders (140) to the respective bead region (180) of the tire (100), and wherein the butyl concentration in the second zone (410) decreases gradually or stepwise from the shoulder (140) towards the bead regions (180).

12. The tire of at least one of the previous claims 1 to 9 wherein the inner liner (400) is formed of two zones (410, 420), wherein in the first zone (420) the inner liner (400) comprises or is made of a butyl rubber, the first zone extending from the first shoulder to the second shoulder underneath the crown portion of the tire, wherein in the second zone (410) the inner liner (400) comprises butyl rubber at a butyl concentration less than in the first zone (420), the second zone (410) extending from each of the shoulders (140) to the respective bead region (180) of the tire (100), and wherein the butyl concentration in the first zone (420) and the second zone (410) decreases gradually or stepwise starting from a location in the inner liner (400) located under the crown portion of the tire (100) towards the bead regions (180).

## Patentansprüche

1. Luftreifen mit einer Lauffläche (120), die in einem Paar Schultern (140) endet, einer Karkassenstruktur (220), die mindestens eine Karkassenlage (240, 260) umfasst, zwei Wulstbereichen (180), zwei Seitenwänden (160), wobei jede Seitenwand (160) einen oberen Seitenwandteil aufweist, der an die Schultern (140) anschließt, einer Gürtelstruktur (300) zwischen der Lauffläche (120) und der Karkassenstruktur (220), und einer luftundurchlässigen Innenisolierung (400), die sich radial einwärts von der Karkassenstruktur (220) befindet, **dadurch gekennzeichnet, dass**
(i) die Innenisolierung (400) aus einem Butylkautschuk gebildet ist und sich unter dem Zenitbereich des Reifens von der ersten Schulter zu der zweiten Schulter erstreckt, und wobei die Innenisolierung (400) sich nicht von den Schultern (140) zu den Wulstbereichen (180) des Reifens (100) erstreckt; oder
(ii) die Innenisolierung (400) durch zwei Zonen (410, 420) gebildet wird, wobei in der ersten Zone (420) die Innenisolierung (400) einen Butylkautschuk umfasst oder daraus besteht, wobei die erste Zone sich unter dem Zenitbereich des Reifens von der ersten Schulter zu der zweiten Schulter erstreckt, und wobei in der zweiten Zone (410) die Innenisolierung (400) keinen Butylkautschuk enthält oder Butylkautschuk enthält, jedoch in einer geringeren Butylkonzentration als in der ersten Zone (420), wobei die zweite Zone (410) sich von jeder der Schultern (140) zu dem jeweiligen Wulstbereich (180) des Reifens (100) erstreckt.

2. Reifen nach Anspruch 1 mit den Merkmalen von Option (i) von Anspruch 1.

3. Reifen nach Anspruch 1 mit den Merkmalen von Option (ii) von Anspruch 1.

4. Reifen nach Anspruch 1, 2 oder 3, wobei der Reifen ein Radialreifen mit Notlaufeigenschaften ist.

5. Reifen nach Anspruch 1, 2, 3 oder 4, wobei die Karkassenlage (240, 260) eine radiale Karkassenlage ist.

6. Reifen nach Anspruch einem der Ansprüche 1-5, wobei jeder obere Seitenwandteil durch einen Einsatz (380) verstärkt ist.

7. Reifen nach mindestens einem der vorgenannten Ansprüche, wobei die Innenisolierung eine Dicke in einem Bereich von 03, bis 1,5 mm aufweist.

8. Reifen nach mindestens einem der vorgenannten Ansprüche, wobei jeder obere Seitenwandteil durch einen ersten Einsatz (380) und einen zweiten Einsatz (415) verstärkt ist.

9. Reifen nach mindestens einem der vorgenannten Ansprüche, umfassend eine erste und eine zweite Karkassenlage (240, 260), wobei der erste Einsatz (260) sich zwischen den zwei Karkassenlagen (240, 260) befindet und der erste Einsatz (380) sich axial einwärts von der axial inneren der ersten und zweiten Karkassenlage (240, 260) befindet.

10. Reifen nach mindestens einem der vorgenannten Ansprüche, wobei die Innenisolierung (400) durch zwei Zonen (410, 420) gebildet wird, wobei in der ersten Zone (420) die Innenisolierung (400) einen Butylkautschuk umfasst oder daraus besteht, wobei die erste Zone sich unter dem Zenitbereich des Reifens von der ersten Schulter zu der zweiten Schulter erstreckt, und wobei in der zweiten Zone (410) die Innenisolierung (400) keinen Butylkautschuk enthält und das gleiche Material wie der erste oder zweite Einsatz (360, 380) enthält oder daraus besteht.

11. Reifen nach mindestens einem der vorgenannten Ansprüche 1 bis 9, wobei die Innenisolierung (400) durch zwei Zonen (410, 420) gebildet wird, wobei in der ersten Zone (420) die Innenisolierung (400) einen Butylkautschuk umfasst oder daraus besteht, wobei die erste Zone sich unter dem Zenitbereich des Reifens von der ersten Schulter zu der zweiten Schulter erstreckt, und wobei in der zweiten Zone (410) die Innenisolierung (400) Butylkautschuk in einer geringeren Butylkonzentration als in der ersten Zone (420) enthält, wobei die zweite Zone (410) sich von jeder der Schultern (140) zu dem jeweiligen Wulstbereich (180) des Reifens (100) erstreckt, und wobei die Butylkonzentration in der zweiten Zone (410) von der Schulter (140) zu den Wulstbereichen (180) hin allmählich oder schrittweise abnimmt.

12. Reifen nach mindestens einem der vorgenannten Ansprüche 1 bis 9, wobei die Innenisolierung (400) durch zwei Zonen (410, 420) gebildet wird, wobei in der ersten Zone (420) die Innenisolierung (400) einen Butylkautschuk umfasst oder daraus besteht, wobei die erste Zone sich unter dem Zenitbereich des Reifens von der ersten Schulter zu der zweiten Schulter erstreckt, und wobei in der zweiten Zone (410) die Innenisolierung (400) Butylkautschuk in einer geringeren Butylkonzentration als in der ersten Zone (420) enthält, wobei die zweite Zone (410) sich von jeder der Schultern (140) zu dem jeweiligen Wulstbereich (180) des Reifens (100) erstreckt, und wobei die Butylkonzentration in der ersten Zone (420) und der zweiten Zone (410), beginnend ab einer in der unter dem Zenitbereich des Reifens (100) befindlichen Stelle in der Innenisolierung (400), zu den Wulstbereichen (180) hin allmählich oder schrittweise abnimmt.

## Revendications

1. Bandage pneumatique possédant une bande de roulement (120) qui se termine en une paire d'épaulements (140), une structure de carcasse (220) comprenant au moins une nappe de carcasse (240, 260), deux zones de talons (180), deux flancs (160), chaque flanc (160) possédant une portion de flanc supérieure qui se relie aux épaulements (140), une structure de ceinture (300) entre la bande de roulement (120) et la structure de carcasse (220), et un calandrage intérieur (400) imperméable à l'air disposé à l'intérieur de la structure de carcasse (220) en direction radiale, **caractérisé en ce que**
(i) le calandrage intérieur (400) est réalisé à partir d'un caoutchouc butyle et s'étend depuis le premier épaulement jusqu'au deuxième épaulement en dessous de la portion de sommet du bandage pneumatique, et dans lequel le calandrage intérieur (400) ne s'étend pas depuis les épaulements (140) jusqu'aux zones de talons (180) du bandage pneumatique (100) ; ou
(ii) le calandrage intérieur (400) est formé par deux zones (410, 420), le calandrage intérieur (400) dans la première zone (420) comprenant du caoutchouc butyle ou étant réalisé à partir de caoutchouc butyle, la première zone s'étendant depuis le premier épaulement jusqu'au deuxième épaulement en dessous de la portion de sommet du bandage pneumatique, et dans lequel, dans la deuxième zone (410), le calandrage intérieur (400) ne comprend pas de caoutchouc butyle ou bien comprend du caoutchouc butyle, mais à une concentration de butyle qui est inférieure à celle que l'on obtient dans la première zone (420), la deuxième zone (410) s'étendant depuis chacun des épaulements (140) jusqu'à la zone de talon respective (180) du bandage pneumatique (100).

2. Bandage pneumatique selon la revendication 1, possédant les caractéristiques de l'option (i) de la revendication 1.

3. Bandage pneumatique selon la revendication 1, possédant les caractéristiques de l'option (ii) de la revendication 1.

4. Bandage pneumatique selon la revendication 1, 2 ou 3, dans lequel le bandage pneumatique est un bandage pneumatique à nappe radiale permettant de rouler à plat.

5. Bandage pneumatique selon la revendication 1, 2, 3 ou 4, dans lequel la nappe de carcasse (240, 260) est une nappe de carcasse radiale.

6. Bandage pneumatique selon l'une quelconque des revendications 1 à 5, dans lequel chaque portion de flanc supérieure est renforcée par un insert (380).

7. Bandage pneumatique selon au moins une des revendications précédentes, dans lequel le calandrage intérieur possède une épaisseur dans la plage de 0,3 à 1,5 mm.

8. Bandage pneumatique selon au moins une des revendications précédentes, dans lequel chaque portion de flanc supérieure est renforcée par un premier insert (380) et par un deuxième insert (360).

9. Bandage pneumatique selon au moins une des revendications précédentes, comprenant une première et une deuxième nappe de carcasse (240, 260), le premier insert (380) étant disposé entre les deux nappes de carcasse (240, 260) et le premier insert (380) est disposé à l'intérieur des premières et deuxième nappes de carcasse (240, 260) en direction axiale.

10. Bandage pneumatique selon au moins une des revendications précédentes, dans lequel le calandrage intérieur (400) est formé de deux zones (410, 420), dans lequel, dans la première zone (420), le calandrage intérieur (400) comprend du caoutchouc butyle ou est réalisé à partir de caoutchouc butyle, la première zone s'étendant depuis le premier épaulement jusqu'au deuxième épaulement en dessous de la portion de sommet du bandage pneumatique, et dans lequel, dans la deuxième zone (410), le calandrage intérieur (400) ne comprend pas de caoutchouc butyle et comprend la même matière que celle du premier ou du deuxième insert (360, 380) ou est réalisé à partir de ladite matière.

11. Bandage pneumatique selon au moins une des revendications précédentes 1 à 9, dans lequel le calandrage intérieur (400) est formé de deux zones (410, 420), dans lequel, dans la première zone (420), le calandrage intérieur (400) comprend du caoutchouc butyle ou est réalisé à partir de caoutchouc butyle, la première zone s'étendant depuis le premier épaulement jusqu'au deuxième épaulement en dessous de la portion de sommet du bandage pneumatique, et dans lequel, dans la deuxième zone (410), le calandrage intérieur (400) comprend du caoutchouc butyle à une concentration de butyle qui est inférieure à celle que l'on obtient dans la première zone (420), la deuxième zone (410) s'étendant depuis chacun des épaulements (140) jusqu'à la zone de talon respective (180) du bandage pneumatique (100), et dans lequel la concentration de butyle dans la deuxième zone (410) diminue progressivement ou par paliers à partir de l'épaulement (140) et en direction des zones de talons (180).

12. Bandage pneumatique selon au moins une des revendications précédentes 1 à 9, dans lequel le calandrage intérieur (400) est formé de deux zones (410, 420), dans lequel, dans la première zone (420), le calandrage intérieur (400) comprend du caoutchouc butyle ou est réalisé à partir de caoutchouc butyle, la première zone s'étendant depuis le premier épaulement jusqu'au deuxième épaulement en dessous de la portion de sommet du bandage pneumatique, et dans lequel, dans la deuxième zone (410), le calandrage intérieur (400) comprend du caoutchouc butyle à une concentration de butyle qui est inférieure à celle que l'on obtient dans la première zone (420), la deuxième zone (410) s'étendant depuis chacun des épaulements (140) jusqu'à la zone de talon respective (180) du bandage pneumatique (100), et dans lequel la concentration de butyle dans la première zone (420) et dans la deuxième zone (410) diminue progressivement ou par paliers à partir d'un endroit dans le calandrage intérieur (400) situé en dessous de la portion de sommet du bandage pneumatique (100) et en direction des zones de talons (180).
